# EUROPÄISCHE PATENTANMELDUNG

(11) **EP 1 965 106 A1**
(43) Veröffentlichungstag der Anmeldung: **03.09.2008**
(21) Anmeldenummer: 08000620.8
(22) Anmeldetag: 15.01.2008
(51) Int. Cl.: F16J 15/06

(54) **Mehrteilige Flachdichtung**

(30) Priorität: 28.02.2007 DE 102007009807
(71) Anmelder: MAN Nutzfahrzeuge Aktiengesellschaft, 80995 München (DE)
(72) Erfinder: Vogel, Werner, 91595 Burgoberach (DE)

(57) **Zusammenfassung**

Mehrteilige Flachdichtung zum Abdichten eines durch wenigstens zwei aneinander grenzende Bauteile gebildeten Raumes, bestehend aus wenigstens zwei im wesentlichen streifenförmige Formteile, wobei an den Formteilenden (3, 3', 7, 7') Verbindungsstellen in Form von Steckverbindern (1, 1') ausgebildet sind, die aus einem zungenförmigen Ansatz (2, 2') an dem einen Formteilende (3, 3') und einer den zungenförmigen Ansatz (2, 2') mit zwei Schenkeln (4, 4', 5, 5') umgreifenden ersten maulförmigen Ausnehmung (6) am anderen Formteilende (7, 7') bestehen. Es ist vorgesehen, dass an dem einen Formteilende (3, 3') an dem sich der zungenförmige Ansatz (2, 2') befindet wenigstens eine zweite maulförmige Ausnehmung (8) so angeordnet ist, dass diese wenigstens einen der beiden Schenkel (4, 4', 5, 5') umgreift, derart dass dieser relativ zum zungenförmigen Ansatz (2, 2') fixiert ist.

## Beschreibung

### Mehrteilige Flachdichtung

Mehrteilige Flachdichtung zum Abdichten eines durch wenigstens zwei aneinander grenzende Bauteile gebildeten Raumes, bestehend aus wenigstens zwei im wesentlichen streifenförmige Formteile, wobei an den Enden der Formteile Verbindungsstellen in Form von Steckverbindern ausgebildet sind, die aus einem zungenförmigen Ansatz an dem einen Formteil und einer den zungenförmigen Ansatz mit zwei Schenkeln umgreifenden ersten maulförmigen Ausnehmung am anderen Formteil bestehen.

Flachdichtungen werden insbesondere dann, wenn ihr Umfang relativ zu ihrer Fläche sehr groß ist, mehrteilig gefertigt, um einerseits den Verschnitt bei der Fertigung zu minimieren und andererseits den Transport zu vereinfachen. Zur Verbindung der Einzelteile derartiger Flachdichtungen sind Verbindungsstellen in Form von Steckverbindungen vorgesehen. Derartige mehrteilige Flachdichtungen sind bereits bekannt, es wird dazu exemplarisch auf die DE 87 16 939 U1 verweisen die eine Anordnung der eingangs genannten Art zeigt. Als Besonderheit bei dieser Anordnung sind an der Verbindungsstelle im zangenförmigen Ansatz Durchstecköffnungen für Befestigungsschrauben vorgesehen, so dass durch diese an den Verbindungsstellen die höchste Krafteinleitung erfolgt, so dass durch die damit verbundene Flächenpressung der Spalt an der Verbindungsstelle dicht gepresst werden soll. Nachteilig bei dieser und allen ähnlichen Anordnungen ist, dass an den Verbindungsstellen jeweils die beiden Schenkel der Ausnehmung in Richtung auf die Außen- bzw. die Innenseite der Flachdichtung ausweichen können, was die Dichtwirkung an der Verbindungsstelle verschlechtert und zum sogenannten "schwitzen" der Dichtung führt.

Um hinsichtlich dieses Umstandes eine Verbesserung herbeizuführen ist es aus der DE 91 06 710 U bekannt, an den Verbindungsstellen einer Flachdichtung die aus mehreren Teilen besteht mäanderförmig hinterschnittene komplementäre Aussparungen vorzusehen, so dass die Enden der Teile gewissermaßen reißverschlussartig ineinander greifen. Durch diese Anordnung stützen sich die einzelnen Zangen jeweils wechselseitig gegeneinander ab, so dass sich eine gute Abdichtung ergibt. Problematisch bei dieser Art von Verbindung ist allerdings, dass, insbesondere wenn die Flachdichtung schmal ist, die schmalen Stellen, an denen die zungenförmigen Anformungen in die Flachdichtung übergehen, durch Transport und Montage bruchgefährdet sind, so dass die Dichtung schnell unbrauchbar wird.

In Vermeidung der vorstehenden Nachteile ist es daher Aufgabe der Erfindung, eine mehrteilige Flachdichtung anzugeben, die an ihren Verbindungsstellen stabil ausgeführt und in ihrer Dichtwirkung verbessert ist.

Gelöst wird die Aufgabe durch eine Anordnung nach Anspruch 1, vorteilhafte Ausgestaltungen der erfindungsgemäßen Flachdichtung sind in den Unteransprüchen gekennzeichnet.

Um einerseits eine stabile Ausführung der Verbindungsstelle bei mehrteiligen Flachdichtungen zu erreichen und andererseits die Dichtwirkung nicht zu beeinträchtigen, ist es vorteilhaft, an dem Formteil an dem sich der zungenförmige Ansatz befindet wenigstens eine zweite maulförmige Ausnehmung so anzuordnen, dass diese wenigstens einen der beiden Schenkel umgreift, derart, dass dieser relativ zum zungenförmigen Ansatz fixiert ist. Diese Abstützung erlaubt es, eine durch die geeignete Wahl der Abmessungen der ineinander greifenden Teile der Dichtung erzeugten Flächenpressung entlang der Trennlinie beider Dichtungsteile stabil aufrecht zu erhalten.

Insbesondere bei schmalen Flachdichtungen ist es weiter von Vorteil, wenn die Formteilenden mit den jeweils zwei Schenkeln einseitig eine Verbreiterung gegenüber ihrer übrigen Streifenform aufweisen und die sich durch die beiden Schenkel ergebende maulförmige erste Ausnehmung im wesentlichen zentrisch in dem verbreiterten Teil des Formteils angeordnet ist. Dadurch lassen sich die zungenförmigen Ansätze an den jeweils anderen Formteilenden exzentrisch zur Streifenform und korrespondierend mit de maulförmigen ersten Ausnehmung so anordnen, dass nach dem Zusammenstecken einerseits die streifenförmigen Formteile miteinander fluchten und andererseits die wenigstens eine zweite maulförmige Ausnehmung so angeordnet ist, dass diese den der Verbreitung abgewandten Schenkel umgreift, wodurch dieser relativ zum zungenförmigen Ansatz fixiert ist. Durch diese Ausführung kann auch bei schmalen Flachdichtungen in vorteilhafter Weise eine hohe Flächenpressung entlang Trennungslinie zweier benachbarter Flachdichtungsteile aufrechterhalten werden.

Weiterhin vorteilhaft ist es, in der Flachdichtung Durchstecköffnungen für Befestigungsschrauben zum Verbinden der wenigstens zwei Bauteile vorzusehen, um die Schließkräfte direkt im Bereich der Dichtung einzuleiten. Dabei ist es von besonderem Vorteil die Durchstecköffnungen so anzuordnen, dass sie die zungenförmigen Ansätze durchsetzen.

Besonders einfach und damit vorteilhaft lässt sich die mehrteilige Flachdichtung fertigen und montieren wenn die zungenförmigen Ansätze an ihrem freien Ende kreisförmig oder kreisringförmig ausgebildet sind und die ersten maulförmigen Ausnehmungen eine zur Außenkontur der Kreis- oder Kreisringform passende Kreisform ausweisen. Soll an den Verbindungsstellen hingegen eine zusätzliche "Verzahnung" erreicht werden, ist es von Vorteil, wenn die zungenförmigen Ansätze an ihrem freien Ende eine Außenkontur in Form eines Vielecks aufweisen und die ersten maulförmigen Ausnehmungen eine zur Außenkontur des Vielecks passende Vieleckform besitzen.

Um eine vorteilhafte zusätzliche Fixierung zweier aneinander grenzender Dichtungsteile zu erreichen kann es vorgesehen sein, dass die zungenförmigen Ansätze wenigstens eine Hinterschneidung aufweisen, die wenigstens einer der Schenkel der ersten maulförmigen Ausnehmungen formschlüssig umgreift. Weiter verbessern lässt sich die Fixierung vorteilhaft dadurch, dass wenigstens einer der Schenkel der ersten maulförmigen Ausnehmung wenigstens eine Hinterschneidung aufweist, die die zweite maulförmige Ausnehmung formschlüssig umgreift.

Beispiele der erfindungsgemäßen Anordnung sind nachfolgend unter Zuhilfenahme der Zeichnungen näher erläutert, es zeigen:
- Fig. 1: die Verbindungsstellen einer mehrteiligen Flachdichtung in Teildarstellung
- Fig. 2: eine Verbindungsstelle
- Fig. 3: eine Verbindungsstelle in montiertem Zustand
- Fig. 4: eine Verbindungsstelle in mit Verzahnung und Hinterschneidung

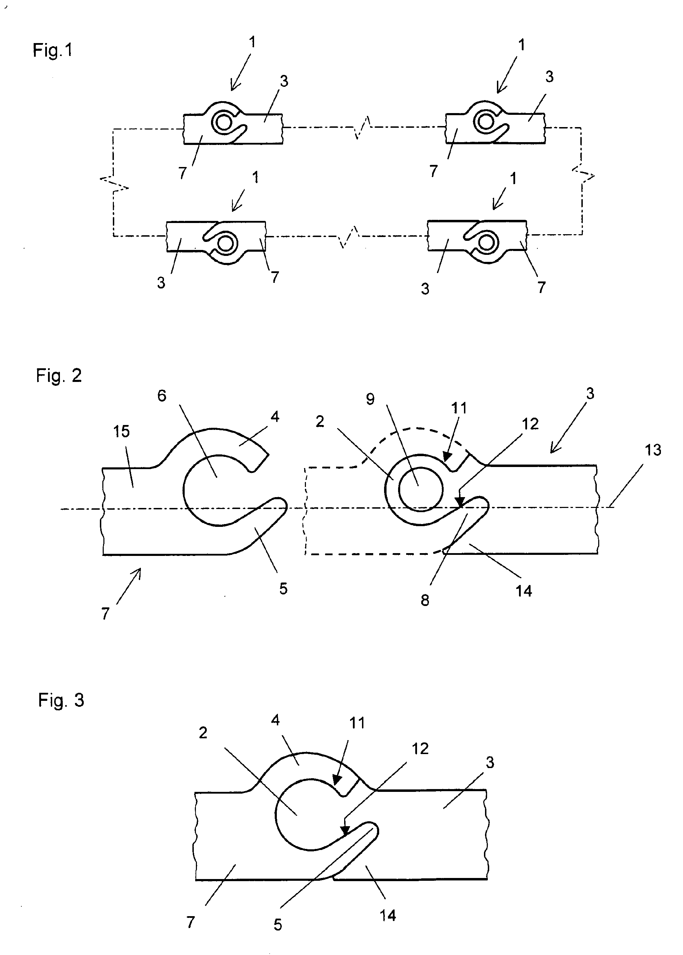

Eine mehrteilige aus Formteilen bestehende Flachdichtung zeigt in Teildarstellung Fig. 1. Von den nicht näher bezeichneten Formteilen sind nur jeweils die Steckverbinder 1 bildenden Formteilenden 3, 7 dargestellt. Eine erste Ausbildungsform einer derartigen Steckverbindung zeigt Fig. 2 in getrenntem Zustand des Steckverbinders 1. An dem einen Formteilende 3 ist ein zungenförmiger Ansatz 2 angeformt, der die Form eines Kreisrings aufweist. Die Anordnung des zungenförmigen Ansatzes 2 ist asymmetrisch zur Mittelachse 13 des Steckverbinders in der Figur 1 nach oben verschoben, so dass im unteren Bereich genügend Raum für eine zweite Ausnehmung 8 verbleibt, die einerseits durch den zungenförmigen Ansatz 2 und andererseits durch eine Anlage 14 begrenzt wird. In dem zungenförmigen Ansatz 2 ist, durch dessen Kreisringform ausgebildete, eine Durchstecköffnung 9 angeordnet, durch die eine Befestigungsschraube (nicht dargestellt) durchsteckbar ist, mittels welcher die den abzudichtenden Raum begrenzenden Bauteile (nicht dargestellt) aneinander befestigt werden können.

Das in Figur 2 links dargestellte Formteilende 7 ist gegenüber dem eigentlichen Dichtstreifen 15 asymmetrisch verbreitert und mit einer in etwa zentrisch zur Verbreiterung angeordneten ersten maulförmigen Ausnehmung 6 versehen, die von zwei Schenkel 4, 5 begrenzt wird. Die Innenkontur der ersten Ausnehmung 6 korrespondiert dabei mit der Außenkontur des zungenförmigen Ansatzes 2, während die Außenkontur des in der Figur 2 unten dargestellten Schenkels 5 mit der Innenkontur der zweiten Ausnehmung 8 in dem einen Formteilende 3, an dem sich der zungenförmige Ansatz 2 befindet, korrespondiert.

Der in der Figur 2 durch eine gestrichelte Linie angedeutete Zusammenbau des Steckverbinders 1 ist in Figur 3 gezeigt. Wie aus der Darstellung ersichtlich, umgreifen die Schenkel 4, 5 den zungenförmigen Ansatz 2 und legen die beiden Formteilenden 3, 7 bedingt durch die Hinterschneidungen 11, 12 an dem zungenförmigen Ansatz 2, aneinander fest. Weiter wird der Schenkel 5 durch die Anlage 14 relativ zum zungenförmigen Ansatz 2 fixiert, so dass der Schenkel 5 nicht ausweichen kann. Werden nun die Formteilenden 3, 7 mit geringen Maßüberschneidungen gefertigt, ergibt sich entlang der Trennlinie zwischen den zungenförmigen Ansatz 2 und dem Schenkel bzw. zwischen diesem und der Anlage 14 eine relativ hohe Flächenpressung und damit eine hohe Dichtwirkung, weil diese Bereiche des Steckverbinders relativ zueinander nicht ausweichen können.
Im Unterschied zu Figur 2 ist bei der Anordnung nach Figur 3 eine Durchstecköffnung nicht vorgesehen, auch ohne diese zusätzliche Maßnahme lässt sich eine ausreichende Dichtwirkung erzielen.

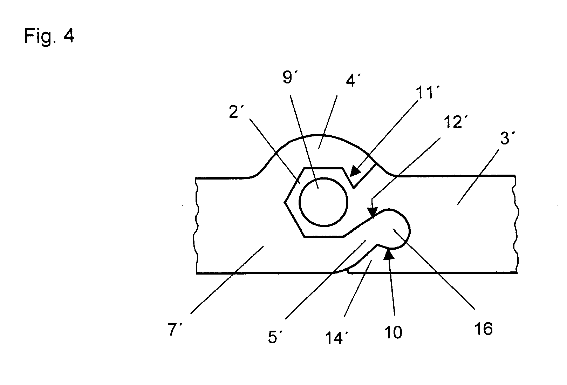

Eine gegenüber dem Beispiel nach Figur 3 verbesserte Fixierung der Formteile zueinander lässt sich durch eine Anordnung gemäß Fig. 4 erreichen. Da die beiden Anordnungen einander ähneln, sind nachfolgend nur die Unterschiede beschrieben. An dem in Fig. 4 gezeigten Steckverbinder weist das eine Formteilende 3' ebenfalls ein zungenförmigen Ansatz 2'auf, dessen Außenkontur ist jedoch vieleckförmig gestaltet. Korrespondierend zu der Vieleckform des zungenförmigen Ansatzes 2'ist die in dem anderen Formteilende 7' vorgesehene Ausnehmung ebenfalls in ihrer Kontur vieleckförmig ausgeführt, so dass sich einerseits gewissermaßen eine "Verzahnung" der beiden Formteilenden 3', 7'ergibt und andererseits die beiden Formteilenden 3', 7'durch die Hinterschneidungen 11', 12'aneinander festgelegt sind.

Zusätzlich ist an dem in der Darstellung unten angeordneten Schenkel 5, an seinem ende, eine kreisförmige Verdickung 16 ausgebildet, die wiederum mit der korrespondierenden, von dem zungenförmigen Ansatz 2'und der Anlage 14'begrenzten Ausnehmung in dem ersten Formteilende 3'zusammenwirkt, derart, dass durch die so ausgebildete Hinterschneidung 10 eine zusätzliche Fixierung des Schenkels 5 in dem ersten Formteil 3'erreicht wird. Die in dem zungenförmigen Ansatz 2'vorgesehene Durchstecköffnung 9'für eine Befestigungsschraube verbessert die Dichtwirkung in der bereits in Verbindung mit Figur 2 beschriebenen Weise, es wird auf die dortigen Ausführungen verwiesen.

Die vorstehend in Verbindung mit dem Beispiel nach Figur 4 beschriebenen zusätzlichen Maßnahmen zur Verbesserung der Dichtwirkung können selbstverständlich auch einzeln oder in beliebiger Kombination zur Anwendung kommen.

Darüber hinaus lassen sich die beschriebenen Ausführungen selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Mehrteilige Flachdichtung zum Abdichten eines durch wenigstens zwei aneinander grenzende Bauteile gebildeten Raumes, bestehend aus wenigstens zwei im wesentlichen streifenförmige Formteile, wobei an den Formteilenden (3, 3', 7, 7') Verbindungsstellen in Form von Steckverbindern (1, 1') ausgebildet sind, die aus einem zungenförmigen Ansatz (2, 2') an dem einen Formteilende (3, 3') und einer den zungenförmigen Ansatz (2, 2') mit zwei Schenkeln (4, 4',5,5') umgreifenden ersten maulförmigen Ausnehmung (6) am anderen Formteilende (7, 7') bestehen, **dadurch gekennzeichnet, dass** an dem einen Formteilende (3, 3') an dem sich der zungenförmige Ansatz (2, 2') befindet wenigstens eine zweite maulförmige Ausnehmung (8) so angeordnet ist, dass diese wenigstens einen der beiden Schenkel (4, 4', 5, 5') umgreift, derart dass dieser relativ zum zungenförmigen Ansatz (2, 2') fixiert ist.

2. Flachdichtung nach Anspruch 1 **dadurch gekennzeichnet, dass** die Formteilenden (7, 7') mit den jeweils zwei Schenkeln (4, 4', 5, 5') einseitig eine Verbreiterung gegenüber ihrer übrigen Streifenform aufweisen und die sich durch die beiden Schenkel (4, 4',5,5') ergebende erste maulförmige Ausnehmung (6) im wesentlichen zentrisch in dem verbreiterten Teil des Formteilendes (7, 7') angeordnet ist und dass die zungenförmigen Ansätze (2, 2') an den jeweils anderen Formteilenden (3, 3') exzentrisch zur Streifenform und korrespondierend mit der ersten maulförmigen Ausnehmung (6) angeordnet sind, derart, dass nach dem Zusammenstecken die streifenförmigen Formteile miteinander fluchten und die wenigstens eine zweite maulförmige Ausnehmung (8) so angeordnet ist, dass diese den der Verbreiterung abgewandten Schenkel (5, 5') umgreift, derart dass dieser relativ zum zungenförmigen Ansatz (2, 2') fixiert ist.

3. Flachdichtung nach einem der vorhergehenden Ansprüche, **dadurch gekennzeichnet, dass** in der Flachdichtung Durchstecköffnungen (9, 9') für Befestigungsschrauben zum Befestigen der wenigstens zwei Bauteile aneinander vorgesehen sind.

4. Flachdichtung nach Anspruch 2 **dadurch gekennzeichnet, dass** die Durchstecköffnungen (9, 9') die zungenförmigen Ansätze (2, 2') durchsetzen.

5. Flachdichtung nach einem der vorhergehenden Ansprüche **dadurch gekennzeichnet, dass** die zungenförmigen Ansätze (2) an ihrem freien Ende kreisförmig oder kreisringförmig ausgebildet sind und die ersten maulförmigen Ausnehmungen (6) eine zur Außenkontur der zungenförmigen Ansätze (2) passende Kreisform aufweisen.

6. Flachdichtung nach einem der vorhergehenden Ansprüche **dadurch gekennzeichnet, dass** die zungenförmigen Ansätze (2') an ihrem freien Ende eine Außenkontur in Form eines Vielecks aufweisen und die ersten maulförmigen Ausnehmungen eine zur Außenkontur der zungenförmigen Ansätze (2') passende Vieleckform besitzen.

7. Flachdichtung nach einem der vorhergehenden Ansprüche, **dadurch gekennzeichnet, dass** die zungenförmigen Ansätze (2, 2') wenigstens eine Hinterschneidung (11, 11', 12 12') aufweisen, die wenigstens einer der Schenkel (4, 4',5,5') der ersten maulförmigen Ausnehmungen (6) formschlüssig umgreift.

8. Flachdichtung nach einem der vorhergehenden Ansprüche, **dadurch gekennzeichnet, dass** wenigstens einer der Schenkel (4, 4', 5, 5') der ersten maulförmigen Ausnehmung wenigstens eine Hinterschneidung (10) aufweist, die die zweite maulförmige Ausnehmung formschlüssig umgreift.
